# EUROPÄISCHE PATENTSCHRIFT

(11) **EP 2 462 010 B1**
(45) Veröffentlichungstag und Bekanntmachung des Hinweises auf die Patenterteilung: **06.11.2013**
(21) Anmeldenummer: 10726037.4
(22) Anmeldetag: 07.06.2010
(51) Int. Cl.: B60S 1/38

(54) **WISCHBLATT IN FLACHBALKENBAUWEISE**
WIPER BLADE OF FLAT BAR DESIGN
RACLETTE D'ESSUIE-GLACE EN FORME DE BARRE PLATE

(30) Priorität: 05.08.2009 DE 102009028233; 26.08.2009 DE 102009028910
(43) Veröffentlichungstag der Anmeldung: 13.06.2012
(73) Patentinhaber: Robert Bosch GmbH, 70442 Stuttgart (DE)
(72) Erfinder: WILMS, Christian, 3582 Koersel-Beringen (BE); KISSELMANN, Rudi, 73207 Plochingen (DE)
(86) Internationale Anmeldenummer: PCT/EP2010/057870
(87) Internationale Veröffentlichungsnummer: WO 2011/015389

(56) Entgegenhaltungen:
- EP-A1- 1 627 787
- EP-A2- 1 232 922
- DE-A1- 19 756 879
- DE-U1-202007 018 131
- FR-A1- 2 851 976
- US-B1- 7 540 062

## Beschreibung

### Stand der Technik

Die Erfindung geht von einem Wischblatt in Flachbalkenbauweise nach dem Oberbegriff des Anspruchs 1 aus.

Aus der DE 10 2006 020 524 A1 ist ein gattungsgemäßes Wischblatt nach dem Oberbegriff von Anspruch 1 bekannt. Seine Wischleiste besitzt eine relativ breite Kopfleiste, in der ein Längskanal zur Aufnahme einer im Querschnitt etwa rechteckigen Federschiene vorgesehen ist. Die Federschiene wird zusammen mit einem Teil der Kopfleiste von einem Halteprofil eines Spoilers umfasst, dessen einander zugewandte freie Schenkel in seitliche Längsnuten unterhalb der Federschiene in die Kopfleiste eingreifen. Auf der einer Fahrzeugscheibe abgewandten Seite der Federschiene ist im Spoiler ein weiterer Längskanal für die Aufnahme einer zweiten im Querschnitt ebenfalls rechteckigen Federschiene angeordnet. Darüber ist zu einem Längsgrat des Spoilers im Bereich eines Anströmprofils ein weiterer Längskanal vorgesehen, der zur Materialeinsparung dient. Um die Montage zu erleichtern, besitzt der im Spoiler vorgesehene Längskanal zur Aufnahme der zweiten Federschiene zur Kopfleiste hin einen Längsspalt. Der Spoiler ist im Bereich des Anströmprofils aus einem weicheren Material hergestellt, als im Bereich seines Halteprofils, wobei die Trennfläche unterhalb der zweiten Federschiene zur Kopfleiste hin verläuft.

EP-A-1627787 offenbart den Oberbegriff des Anspruchs 1.

### Offenbarung der Erfindung

Nach der Erfindung ist die Kopfleiste frei von Federschienen. Die Schenkel des Spoilers können vollständig in Längsnuten des Wischerleistenkopfes eingreifen. Die Längsnuten der Kopfleiste bestehen für die Aufnahme des Halteprofils des Spoilers bildenden Teile aus einem härteren Werkstoff als die Wischlippe und/oder der Kippsteg. Durch die erfindungsgemäße Gestaltung des Wischblatts kann die Kopfleiste sehr schmal gestaltet werden, sodass sich insgesamt ein sehr schmales Wischblatt ergibt, das in seiner Breite nicht durch die in der Kopfleiste angeordneten Federschiene, sondern durch die gewünschten Strömungsverhältnisse am Spoiler bestimmt wird. Die notwendige Gestaltung und Auslegung der Tragelemente in Form von Federschienen ist auf die äußere Gestaltung des Spoilers abgestimmt. Die Federschienen passen sich im Querschnitt der zur Verfügung stehenden Innenkontur der Längskanäle an, soweit dies unter Berücksichtigung der technischen Anforderungen an die Federeigenschaften der Federschienen möglich ist. So können zweckmäßigerweise ein oder mehrere Federschienen parallel übereinander und/oder nebeneinander angeordnet werden, von denen zumindest eine im Querschnitt von der Rechteckform abweicht und auf der Anströmseite in ihrer Querschnittkontur der Innenkontur des zugeordneten Längskanals folgt. Somit kann das Spoilerprofil bis in die Nähe des Längsgrates für die Aufnahme einer Federschiene genutzt werden. Dabei ergeben sich im Wesentlichen trapezförmige oder dreieckige Querschnitte, deren Seiten auch gekrümmt verlaufen können.

Um die Beweglichkeit der Federschienen in den Längskanälen relativ zum Spoiler zu gewährleisten, ohne dass Geräusche entstehen oder sich die Federschienen verklemmen, ist es zweckmäßig, dass die Zwischenräume zwischen den Federschienen und den Längskanälen durch Moosgummi oder Weichgummi ausgefüllt werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine Seitenansicht eines erfindungsgemäßen Wischblatts, das sich ohne Belastung an einer Fahrzeugscheibe abstützt,
Fig. 2 einen Querschnitt entsprechend der Linie II-II in Fig. 1 und Fig. 3 bis Fig. 6 Varianten zu Fig. 2.

Ein Wischblatt 10 in Flachbalkenbauweise ist aus einer Wischleiste 14, einem Spoiler 32 und mindestens einer Federschiene 46 aufgebaut. An den Enden des Wischblatts 10 befinden sich Endkappen 58, die die relative Beweglichkeit der Wischleiste 14 der Federschiene 46 und des Spoilers 32 in Längsrichtung relativ zueinander begrenzen. Im mittleren Bereich des Wischblatts 10 ist ein Anschlusselement 12 am Wischblatt 10 befestigt. Es dient zur gelenkigen Verbindung mit einem nicht näher dargestellten Wischarm. Das Wischblatt 10 ist in unbelastetem Zustand zu einer Fahrzeugscheibe 16 hin konkav gekrümmt, sodass es an seinen Enden an der Fahrzeugscheibe 16 anliegt. Im belasteten Zustand wird die Wischleiste 14 auf ihrer gesamten Länge mit einem geeigneten Anpressdruck an die Fahrzeugscheibe 16 angepresst.

Die Wischleiste 14 umfasst eine Wischlippe 18, die über einen Kippsteg 20 mit einer Kopfleiste 22 verbunden ist. Zwischen dem Kippsteg 20 und der Kopfleiste 22 sind seitliche Stützleisten 28 vorgesehen, die das Umlegen der Wischlippe 18 in den Umkehrpositionen des Wischblatts 10 während des Wischbetriebs begünstigen.

Die Kopfleiste 22 besitzt seitliche Längsnuten 24, in die ein Halteprofil 38 des Spoilers 32 eingreift. Hierzu dienen L-förmige Schenkel 40 an den Längsseiten des Halteprofils 38, die jeweils mit einem Schenkel mit einem Anströmprofil 34 des Spoilers 32 verbunden sind, während die freien Schenkel 42 nach innen gerichtet sind und in die Längsnuten 24 eingreifen. Die Längsnuten 24 bilden zwischen sich einen Steg 26. Der zur oberen Seite, die der Wischlippe 18 abgewandt ist, anschließende Teil der Kopfleiste 22, wird als Rückenleiste 30 bezeichnet und von dem Halteprofil 38 des Spoilers 32 umfasst.

Die Kopfleiste 22 ist zweckmäßigerweise in einem Mehrstoffextrusionsverfahren aus einem härteren Werkstoff hergestellt als die übrige Wischleiste 14, nämlich die Wischlippe 18 und die Stützleisten 28. Dadurch ergibt sich zwischen dem Halteprofil 38 des Spoilers und der Kopfleiste 22 eine geringe Reibung verbunden mit einem geringen Verschleiß. Außerdem kann auf Grund der höheren Festigkeit die Kopfleiste 22 sehr schmal ausgebildet werden.

Das sich an das Halteprofil 38 anschließende Anströmprofil 34 ist aus einem weicheren Werkstoff hergestellt, als das Halteprofil 38. Zweckmäßigerweise wird der Spoiler 32 in einem Mehrstoffextrusionsverfahren hergestellt. Das Anströmprofil 34 besitzt eine Querschnittgrundstruktur, die einem rechtwinkligen Dreieck angeglichen ist, wobei der rechte Winkel an der dem Halteprofil 38 zugewandten Seite liegt. An der gegenüberliegenden Seite läuft der Spoiler 32 zu einem schmalen Längsgrat 36 zusammen. Die dem Fahrtwind ausgesetzten Außenflächen des Anströmprofils 34 können entsprechend den gewünschten Strömungsverhältnissen am Spoiler 32 auf der Anströmseite und/oder der Abströmseite konkav oder konvex geformt sein.

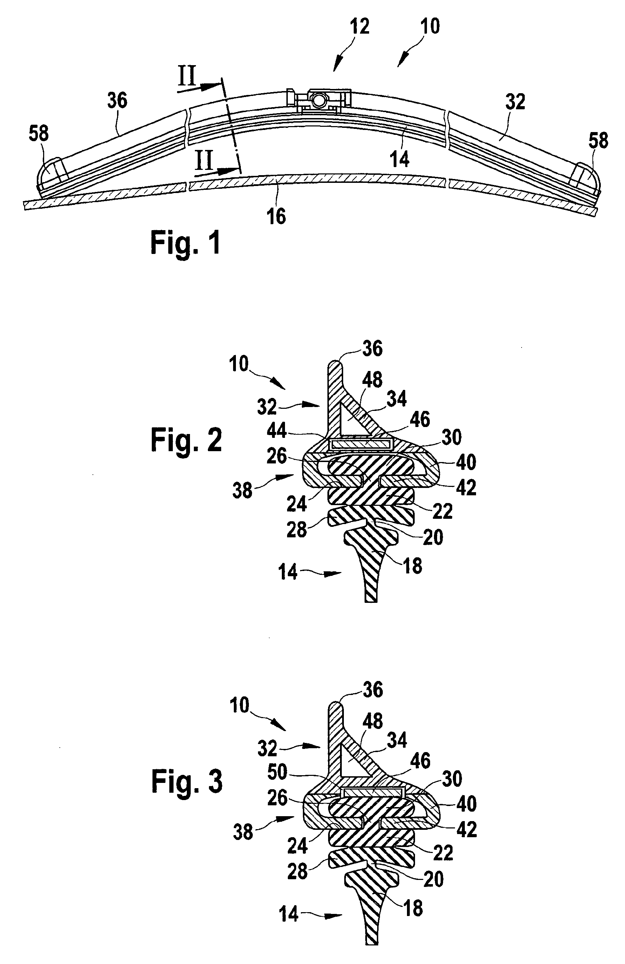

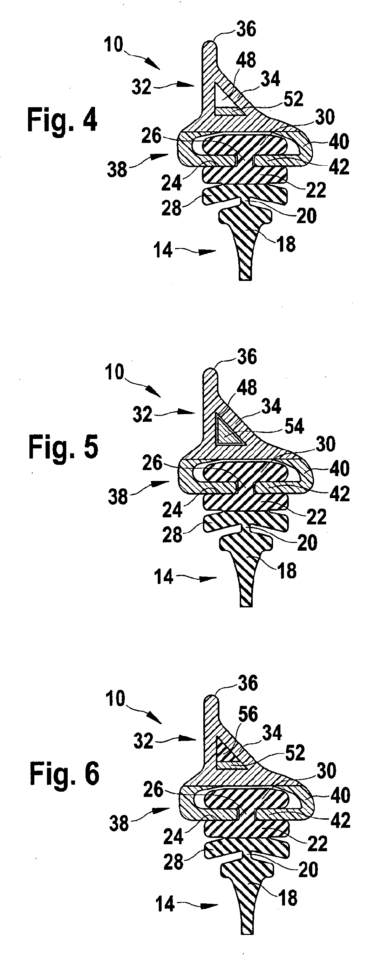

Das Anströmprofil 34 des Spoilers 32 besitzt mindestens einen ersten Längskanal 44, in dem die erste Federschiene 46 untergebracht ist. Sie besitzt zweckmäßigerweise einen flachen, rechteckigen Querschnitt. Während der erste Längskanal 44 in der Ausführung nach Fig. 2 geschlossen ist, ist bei der Ausgestaltung nach Fig. 3 der erste Längskanal 50 zur Rückenleiste 30 hin offen, sodass die erste Federschiene 46 an der Rückenleiste 30 der Kopfleiste 22 anliegen kann. Bei beiden Ausführungsformen befindet sich jeweils oberhalb der ersten Federschiene 46 zum Längsgrat 36 hin ein zweiter Längskanal 48, dessen Innenkontur der Außenkontur des Anströmprofils 34 angeglichen ist. Der zweite Längskanal 48 kann zusätzlich zum ersten Längskanal 44, 50 zur Aufnahme einer weiteren zweiten Federschiene 52, 54 dienen oder als einziger Längskanal 44, 50 eine Federschiene 52, 54 entsprechend den Ausgestaltungen nach Fig. 4 bis Fig. 6 aufnehmen. Die zweiten Federschienen 52, 54 passen sich, soweit es die gewünschten und erforderlichen Federeigenschaften der Federschienen 52, 54 zulassen, der Innenkontur des zweiten Längskanals 48 zumindest teilweise an. So besitzt die zweite Federschiene 52 nach Fig. 4 einen im Wesentlichen trapezförmigen Querschnitt, während die zweite Federschiene 54 nach Fig. 5 und Fig. 6 einen im Wesentlichen dreieckigen Querschnitt besitzt. Um während des Wischbetriebs eine gewisse Relativbewegung zwischen den Federschienen 46, 52, 54 und den zweiten Längskanälen 44, 48 zuzulassen, ist es zweckmäßig, den Zwischenraum zwischen der zweiten Federschiene 46, 52, 54 und den Längskanälen 44, 48 mit einem Moosgummi oder Weichgummi auszufüllen. Eine solche Ausgestaltung ist beispielhaft in Fig. 6 dargestellt. Das Moosgummi bzw. Weichgummi 56 erlaubt einerseits die erforderliche geringe Längsverschiebung bei unterschiedlichen Krümmungsradien, verhindert aber gleichzeitig, dass Geräusche durch Kontakte mit den Längskanalwänden entstehen.

Die in den Fig. 2 bis Fig. 6 dargestellten ersten und zweiten Federschienen 46, 52, 54 und die zugeordneten ersten und zweiten Längskanäle 44, 48, 50 können bei einem Wischblatt 10 einzeln oder in Kombination miteinander angewendet werden.

## Patentansprüche

1. Wischblatt (10) in Flachbalkenbauweise, das aus einer Wischleiste (14) mit einer über einen Kippsteg (20) mit einer Kopfleiste (22) verbundenen Wischlippe (18), aus mindestens einer als Tragelement dienenden, vorgebogenen, elastischen Federschiene (46, 52, 54), aus einem Anschlusselement (12) und aus einem Spoiler (32) mit einem Anströmprofil (34) und einem Halteprofil (38) aufgebaut ist, wobei der Spoiler (32) in seinem Anströmprofil (34) mindestens einen Längskanal (44, 48, 50) mit einer Federschiene (45, 52, 54) besitzt und sein Halteprofil (38) an seinen Längsseiten nach innen gerichtete, einander gegenüberliegende freie Schenkel (42) aufweist, die in entsprechende Längsnuten (24) der Kopfleiste (22) eingreifen, wobei die Kopfleiste (22) frei von Federschienen ist, insbesondere keine Federschiene (46, 52, 54) die Kopfleiste (22) berührt, **dadurch gekennzeichnet, dass** das Anströmprofil (34) des Spoilers (32) in Richtung des Längsgrats (36) einen zweiten Längskanal (48) besitzt, der im Querschnitt eine im Wesentlichen gleiche Kontur aufweist wie das Anströmprofil (34) und in dem eine zweite Federschiene (52, 54) vorgesehen ist, die zumindest teilweise der Innenkontur des zweiten Längskanals (48) folgt.

2. Wischblatt (10) nach Anspruch 1, **dadurch gekennzeichnet, dass** die Wischleiste (14) zwischen dem Kippsteg (20) und der Kopfleiste (22) seitliche Stützleisten (28) besitzt, die aus dem gleichen Werkstoff bestehen wie die Wischlippe (18).

3. Wischblatt (10) nach Anspruch 1 oder 2, **dadurch gekennzeichnet, dass** das Anströmprofil (34) des Spoilers (32) eine erste Federschiene (46) mit einem flachen Querschnitt hat, der etwa parallel zu einer Rückenleiste (30) der Kopfleiste (22) verläuft, wobei diese in einem ersten Längskanal (44, 50) nahe der Kopfleiste (22) untergebracht ist, und in Richtung eines Längsgrats (36) ein zweiter Längskanal (48) alternativ oder zusätzlich vorgesehen ist, der im Querschnitt eine im Wesentlichen gleiche Kontur aufweist wie das Anströmprofil (34).

4. Wischblatt (10) nach Anspruch 3, **dadurch gekennzeichnet, dass** der erste Längskanal (50) zur Kopfleiste (22) hin offen ist.

5. Wischblatt (10) nach einem der vorhergehenden Ansprüche, **dadurch gekennzeichnet, dass** der Zwischenraum zwischen dem Längskanal (44, 48, 50) und der zugeordneten Federschiene (46, 52, 54) mit Moosgummi oder Weichgummi (56) ausgefüllt ist.

6. Wischblatt (10) nach einem der vorhergehenden Ansprüche, **dadurch gekennzeichnet, dass** an seinen Enden Endkappen (58) angeordnet sind, die die relative Bewegung zwischen dem Spoiler (32) und den Federschienen (46, 52, 54) sowie der Wischleiste (14) in Längsrichtung begrenzen.

7. Wischblatt (10) nach einem der vorhergehenden Ansprüche, **dadurch gekennzeichnet, dass** das Halteprofil (38) aus einem härteren Werkstoff besteht als das Anströmprofil (34).

8. Wischblatt (10) nach einem der vorhergehenden Ansprüche, **dadurch gekennzeichnet, dass** zumindest die, die Längsnuten (24) der Kopfleiste (22) zur Aufnahme des Halteprofils (38) des Spoilers (32) bildenden Teile, aus einem härteren Werkstoff bestehen als die Wischlippe (18) und/oder der Kippsteg (20).

9. Wischblatt (10) nach einem der vorhergehenden Ansprüche, **dadurch gekennzeichnet, dass** die Schenkel (42) vollständig in die Längsnuten (24) eintauchen.

## Claims

1. Wiper blade (10) of flat bar design, which is constructed from a wiper strip (14) having a wiping lip (18) which is connected to a head strip (22) via a tilting web (20), from at least one pre-bent, elastic spring rail (46, 52, 54) serving as a supporting element, from a connecting element (12) and from a spoiler (32) having an approach flow profile (34) and a retaining profile (38), wherein the approach flow profile (34) of said spoiler (32) has at least one longitudinal channel (44, 48, 50) with a spring rail (46, 52, 54) and the longitudinal sides of the retaining profile (38) of said spoiler have inwardly directed, mutually opposite, free limbs (42) which engage in corresponding longitudinal grooves (24) of the head strip (22), wherein the head strip (22) is free from spring rails, and, in particular, no spring rail (46, 52, 54) touches the head strip (22), **characterized in that** the approach flow profile (34) of the spoiler (32) has a second longitudinal channel (48) in the direction of the longitudinal ridge (36), said second longitudinal channel having a substantially identical contour in cross section as the approach flow profile (34) and a second spring rail (52, 54) which at least partially follows the internal contour of the second longitudinal channel (48) is provided in the latter.

2. Wiper blade (10) according to Claim 1, **characterized in that** the wiper strip (14) has lateral support strips (28), which are composed of the same material as the wiping lip (18), between the tilting web (20) and the head strip (22).

3. Wiper blade (10) according to Claim 1 or 2, **characterized in that** the approach flow profile (34) of the spoiler (32) has a first spring rail (46) with a flat cross section running approximately parallel to a back strip (30) of the head strip (22), said spring rail being accommodated in a first longitudinal channel (44, 50) in the vicinity of the head strip (22), and a second longitudinal channel (48) is alternatively or additionally provided in the direction of a longitudinal ridge (36), the second longitudinal channel having an essentially identical contour in cross section as the approach flow profile (34).

4. Wiper blade (10) according to Claim 3, **characterized in that** the first longitudinal channel (50) is open toward the head strip (22).

5. Wiper blade (10) according to one of the preceding claims, **characterized in that** the intermediate space between the longitudinal channel (44, 48, 50) and the associated spring rail (46, 52, 54) is filled with microcellular rubber or soft rubber (56).

6. Wiper blade (10) according to one of the preceding claims, **characterized in that** end caps (58) which limit the relative movement between the spoiler (32) and the spring rails (46, 52, 54) and the wiper strip (14) in the longitudinal direction are arranged at the ends of said wiper blade.

7. Wiper blade (10) according to one of the preceding claims, **characterized in that** the retaining profile (38) is composed of a harder material than the approach flow profile (34).

8. Wiper blade (10) according to one of the preceding claims, **characterized in that** at least the parts forming the longitudinal grooves (24) of the head strip (22) for receiving the retaining profile (38) of the spoiler (32) are composed of a harder material than the wiping lip (18) and/or the tilting web (20).

9. Wiper blade (10) according to one of the preceding claims, **characterized in that** the limb (42) fully enter the longitudinal grooves (24).

## Revendications

1. Balai d'essuie-glace (10) de construction en forme de barre plate, constitué d'une raclette de balai d'essuie-glace (14) avec une lèvre de balai d'essuie-glace (18) connectée à une raclette de tête (22) par le biais d'une nervure basculante (20), d'au moins un rail à ressort élastique (46, 52, 54) précintré servant d'élément de support, d'un élément de raccordement (12) et d'un déflecteur (32) ayant un profilé d'attaque (34) et un profilé de fixation (38), le déflecteur (32) possédant, dans son profilé d'attaque (34), au moins un canal longitudinal (44, 48, 50) avec un rail à ressort (46, 52, 54) et son profilé de fixation (38) présentant, au niveau de ses côtés longitudinaux, des branches libres opposées l'une à l'autre (42) et orientées vers l'intérieur, lesquelles viennent en prise dans des rainures longitudinales correspondantes (24) de la raclette de tête (22), la raclette de tête (22) étant exempte de rails à ressort, en particulier aucun rail à ressort (46, 52, 54) ne venant en contact avec la raclette de tête (22), **caractérisé en ce que** le profilé d'attaque (34) du déflecteur (32) possède, dans la direction de l'arête longitudinale (36), un deuxième canal longitudinal (48), qui présente, en section transversale, un contour essentiellement identique au profilé d'attaque (34) et dans lequel est prévu un deuxième rail à ressort (52, 54) qui suit au moins en partie le contour intérieur du deuxième canal longitudinal (48).

2. Balai d'essuie-glace (10) selon la revendication 1, **caractérisé en ce que** la raclette de balai d'essuie-glace (14) possède, entre la nervure basculante (20) et la raclette de tête (22), des raclettes de support latérales (28) qui se composent du même matériau que la lèvre de balai d'essuie-glace (18).

3. Balai d'essuie-glace (10) selon la revendication 1 ou 2, **caractérisé en ce que** le profilé d'attaque (34) du déflecteur (32) présente un premier rail à ressort (46) avec une section transversale plate qui s'étend approximativement parallèlement à une raclette arrière (30) de la raclette de tête (22), celui-ci étant monté dans un premier canal longitudinal (44, 50) à proximité de la raclette de tête (22), et, dans la direction d'une arête longitudinale (36), un deuxième canal longitudinal (48) étant prévu en variante ou en plus, lequel présente une section transversale ayant essentiellement le même contour que le profilé d'attaque (34).

4. Balai d'essuie-glace (10) selon la revendication 3, **caractérisé en ce que** le premier canal longitudinal (50) est ouvert vers la raclette de tête (22).

5. Balai d'essuie-glace (10) selon l'une quelconque des revendications précédentes, **caractérisé en ce que** l'espace intermédiaire entre le canal longitudinal (44, 48, 50) et le rail à ressort associé (46, 52, 54) est rempli de caoutchouc mousse ou de caoutchouc souple (56).

6. Balai d'essuie-glace (10) selon l'une quelconque des revendications précédentes, **caractérisé en ce que** des embouts d'extrémité (58) sont disposés au niveau de ses extrémités, lesquels délimitent le mouvement relatif entre le déflecteur (32) et les rails à ressort (46, 52, 54) et la raclette de balai d'essuie-glace (14) dans la direction longitudinale.

7. Balai d'essuie-glace (10) selon l'une quelconque des revendications précédentes, **caractérisé en ce que** le profilé de fixation (38) se compose d'un matériau plus dur que le profilé d'attaque (34).

8. Balai d'essuie-glace (10) selon l'une quelconque des revendications précédentes, **caractérisé en ce qu'**au moins les parties formant les rainures longitudinales (24) de la raclette de tête (22) pour recevoir le profilé de fixation (38) du déflecteur (32) se composent d'un matériau plus dur que la lèvre de balai d'essuie-glace (18) et/ou que la nervure basculante (20).

9. Balai d'essuie-glace (10) selon l'une quelconque des revendications précédentes, **caractérisé en ce que** les branches (42) s'enfoncent complètement dans les rainures longitudinales (24).
